# EUROPEAN PATENT SPECIFICATION

(11) **EP 4 497 850 B1**
(45) Date of publication and mention of the grant of the patent: **25.03.2026**
(21) Application number: 23306298.3
(22) Date of filing: 27.07.2023
(51) Int. Cl.: C25B 15/08, C25B 1/04

(54) **SUPPLYING SYSTEM FOR FEEDING AN ELECTROLYSIS UNIT AND RELATED INSTALLATION AND METHOD**
ZUFUHRSYSTEM ZUR ZUFUHR EINER ELEKTROLYSEEINHEIT UND ZUGEHÖRIGE ANLAGE UND VERFAHREN
SYSTÈME D'ALIMENTATION POUR ALIMENTER UNE UNITÉ D'ÉLECTROLYSE ET INSTALLATION ET PROCÉDÉ ASSOCIÉS

(43) Date of publication of application: 29.01.2025
(73) Proprietor: TotalEnergies OneTech, 92400 Courbevoie (FR)
(72) Inventor: AYME-PERROT, David, 92078 PARIS LA DEFENSE (FR); DUBOUIS, Nicolas, 92078 PARIS LA DEFENSE (FR)
(74) Representative: Lavoix

(56) References cited:
- EP-A1- 0 826 636
- EP-A1- 3 842 570
- WO-A2-2007/013957
- GB-A- 2 607 445
- US-A1- 2017 129 796

## Description

The present invention concerns a supplying system for feeding an electrolysis unit with an electrolyte feed stream.

The invention also concerns an electrochemical installation, notably for the generation of dihydrogen from water electrolysis, for electrochemical CO₂ reduction, for electrochemical N₂ reduction of for chlor-alkali electrolysis, the installation comprising such a supplying system, as well as a method for feeding an electrolysis unit with an electrolyte feed stream.

Water electrolyzers are used to generate dihydrogen and dioxygen by passing an electric current through an aqueous electrolyte to convert water electrochemically into dihydrogen and dioxygen.

Existing systems comprise for example stacks of several electrochemical cells. In each cell, dihydrogen is produced at a negative electrode separated by a membrane from the positive electrode where dioxygen is produced.

Other systems are based on membraneless cells which requires specific cell/stack architecture. For instance, in a fluidic electrolyzer cell, this is basically the incoming water flow velocity that allows to separate the gas generated on electrodes located on each side of water channels.

While water electrolysis has been significantly optimized during the 20^{th} century, the quantity of hydrogen produced by this method remains very low (4% of the world hydrogen production) as compared to hydrogen produced from fossil fuels (96% of the world hydrogen production) mainly via steam methane reforming (grey hydrogen).

The main factor that impacts the cost of hydrogen produced by electrolysis is the cost of electricity, that can represent up to 80% of the costs. The deployment of large renewable power farms (e.g solar and/or wind farms) that are built or projected in specifically sunny and/or windy regions of the world will allow to drastically decrease the electricity cost and promote the development of large electrolyzer plants based on multiple stacks. This opens the way to the potential production of large amounts of so called "renewable" or green hydrogen. However, the economic viability of such plants requires to lower production costs as much as possible and thus, an improved overall energy efficiency of the process must allow to optimize the electricity consumption.

In addition, since water is consumed during the generation of dihydrogen and dioxygen, electrolyte require to be constantly fed with water. In the case of large water electrolysis installations, huge quantities of water are required and must be pumped within the electrolyzers. Future large plants (GW) of water electrolysis will be presumably islanded plants that should be at proximity of the sea to promote hydrogen transport. In the meantime, such localization would allow to produce water from seawater desalination units.

WO2007/013957 describes and electrolyte supply system with an osmotic dispense pump.

One aim of the invention is therefore to provide an installation, notably for the generation of dihydrogen and dioxygen, which is more efficient and reduces the energy consumption.

To this aim, the subject-matter of claim 1 is a supplying system for feeding an electrolysis unit with an electrolyte feed stream, comprising
- an electrolyte reservoir configured to contain an electrolyte solution, the electrolyte reservoir comprising an electrolyte supply inlet and an electrolyte recovery outlet, the electrolyte reservoir being configured to be fluidly connected to the electrolysis unit through the electrolyte fluid recovery outlet,
- a circulation unit for circulating an electrolyte solution in the electrolyte reservoir between the electrolyte supply inlet and the electrolyte recovery outlet,
wherein the circulation unit comprises:
- a movable actuator configured to create a displacement of the electrolyte solution in the electrolyte reservoir, and
- an osmosis unit comprising a first chamber fluidly coupled to a first source of a low-salted solution, a second chamber fluidly coupled to a second source of a high-salted solution and a semi-permeable membrane separating the first and second chambers,
the osmosis unit being configured to move the actuator by an osmosis phenomenon between the first and the second chambers.

The osmosis unit generates a water flux that can be transformed in mechanical force to create an electrolyte flow with a sufficient velocity to feed the electrolyzer. No additional pumping system, that would need electrical energy, is required to feed the electrolyzer in electrolyte. Energy efficiency is thus greatly improved.

Furthermore, the supplying system according to the invention makes it possible to reduce the saline concentration of brine rejected notably from a desalination unit.

The system according to the invention may comprise one or more of the following features, taken solely, or according to any technical feasible combination:
- the high-salted solution has a salt mass concentration at least 1.5 times higher than a salt mass concentration of the low-salted solution, the mass concentration being measured 25°C under atmospheric pressure;
- the osmosis unit is fluidly coupled to a brine rejection system of a desalinization unit;
- each chamber further comprises a respective purge outlet;
- the actuator is at least partially received in the osmosis unit, notably in the second chamber, so that osmosis between the first chamber and the second chamber move the actuator;
- the actuator is at least partially received in the electrolyte reservoir;
- the moveable actuator is a piston, osmosis between the first and second chambers displacing of the piston along a longitudinal axis;
- the moveable actuator is a rotor system configured to rotate around a rotation axis, rotation of the rotor system being generated by osmosis between the first and second chambers;
- the semi-permeable membrane is made of a composite polymer-based material.

The invention also concerns an installation, notably for the generation of dihydrogen and dioxygen by water electrolysis, for electrochemical CO₂ reduction, for electrochemical N₂ reduction of for chlor-alkali electrolysis, the installation comprising:
- an electrolysis unit adapted for receiving an electrolyte feed stream, the electrolysis unit comprising an electrolyzer, and
- a supplying system as described above.

The installation according to the invention may comprise one or more of the following features, taken solely, or according to any technical feasible combination:
- the electrolyzer is a fluidic electrolyzer;
- the installation further comprises a desalinization unit configured to feed the osmosis unit.

The invention also concerns an operating method for feeding an electrolysis unit with an electrolyte feed stream, comprising the step of:
- providing a supplying system as described above;
- injecting the electrolyte solution in the electrolyte reservoir;
- injecting the low-salted solution in the first chamber of the osmosis unit and the high-salted solution in the second chamber of the osmosis unit, so that there is a salt gradient between the first and the second chambers, said salt gradient generating a water flux between the first chamber and the second chamber, said water flux setting the actuator in motion.

The method according to the invention may comprise one or more of the following features, taken solely, or according to any technical feasible combination:
- the step of injecting the high-salted solution comprises a step of recovering brine from a brine rejection system of a desalinization unit;
- the method further comprises a step of purging the first and second chambers.

The invention will be better understood, based on the following description, given solely as an example and made in reference to the appended drawings, in which:
- Figure 1 is a schematic flow chart of an installation according to the invention, the installation comprising a supplying system according to the invention;
- Figures 2 is a schematic view of the supplying system of Figure 1 according to a first embodiment, the supplying system comprising a piston represented here in an initial position;
- Figure 3 is a view similar to Figure 2, the piston being represented here in a final position;
- Figure 4 is a view similar to Figure 2 of a supplying system according to a second embodiment.

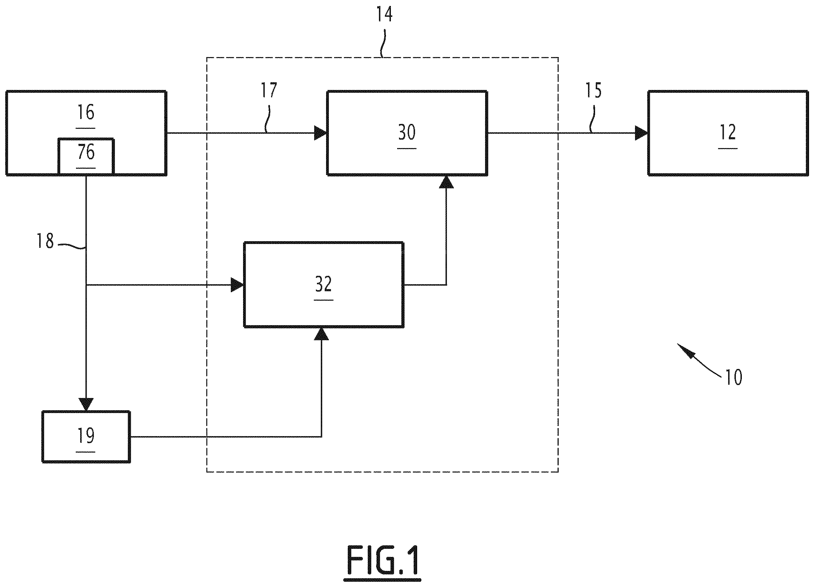

An installation 10, notably for the generation of dihydrogen and dioxygen, according to the invention is shown in Figure 1.

The installation 10 is intended to carry out the electrolysis of water and comprises an electrolysis unit 12 and a supplying system 14 intended to feed the electrolysis unit 12 with an electrolyte feed stream 15 of an electrolyte solution, also called electrolyte.

Advantageously, the installation 10 further comprises a seawater desalinization unit 16 configured to generate a purified water stream 17 and a brine stream 18.

Advantageously, the installation 10 is located in proximity to a source 19 of water, for example sea.

The electrolysis unit 12 is adapted for receiving the electrolyte feed stream 15.

In the following description, the electrolysis unit 12 is a unit adapted for producing a dihydrogen flow and a dioxygen flow by water electrolysis. In a variant, the electrolysis unit 12 is a unit adapted for electrochemical CO₂ reduction, electrochemical N₂ reduction of for chlor-alkali electrolysis.

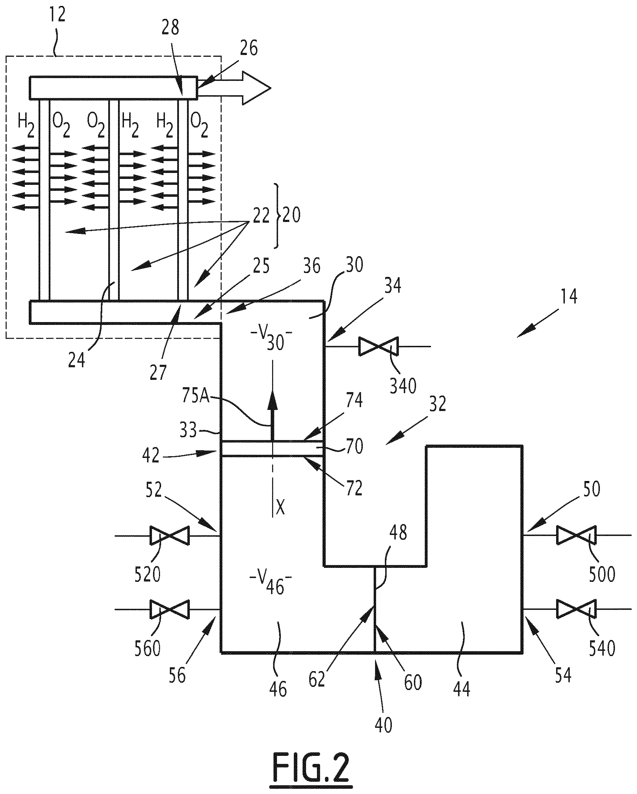

The electrolysis unit 12 comprises an electrolyzer 20 (shown in Figure 2), where the electrochemical reactions take place, and a balance of plant connected to the electrolyzer 20, the balance of plant comprising various fluid handling components to manage the incoming fluids (in particular steam, electricity, air/nitrogen) and the outgoing fluids (hydrogen and oxygen).

The electrolyzer 20 comprises a plurality of electrochemical cells 22, which are assembled in series or in parallel to form stacks. All the stacks are coupled with the balance of plant.

Each cell 22 comprises at least two electrodes immersed in an electrolyte. The two electrodes may be separated by one or more separators. The cells 22 are for example arranged in rows defining a stack. One electrode is a cathode, charged negatively where the dihydrogen is produced and the other is an anode. An electrolysis of water takes place by providing water and electricity to the cells.

As an alternative, as shown in the first exemplary embodiment illustrated in Figure 2, the electrolyzer 20 is a fluidic electrolyzer 20. Said electrolyzer 20 is based upon membraneless cells.

Each cell 22 includes a cathode electrode (not shown), an anode electrode (not shown), a microfluidic channel 24 and a mechanism (not shown) for directing the two produced gases in directions so as to facilitate collection of the individual gases.

The cathode electrode and the anode electrode are located nearby the microfluidic channel 24 and permit to extract dihydrogen and dioxygen inside the microfluidic channel 24 from the electrolyte solution inside the microfluidic channel 24.

The cathode electrode and the anode electrode are here separated solely by the electrolyte solution in the microfluidic channel 24.

The distance between electrodes is preferably optimized to minimize gas diffusion across the channel 24, as known per se.

The electrolyzer 20 further includes an electrolyte flow inlet 25, an electrolyte flow outlet 26 and at least a dihydrogen mixture outlet and a dioxygen mixture outlet (not shown) for recovering the products of the electrolysis carried out into the electrolysis cells 22 of the electrolyzer 20.

For example, as shown in Figure 2, the electrolyte flow inlet 25 comprises a plurality of channel inlets 27 to supply each channel 24 with electrolyte, and the electrolyte flow outlet 26 comprises a plurality of channel outlets 28 to recover electrolyte from each channel 24. The electrolyte flow inlet 25 and outlet 26 are here comb-shaped.

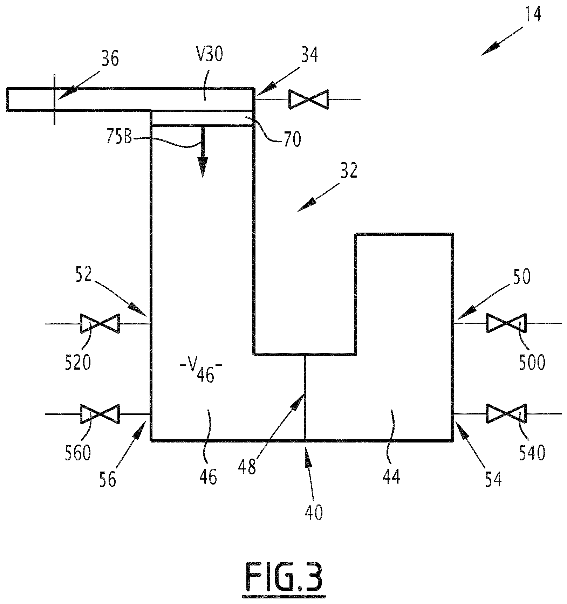

Figures 2 and 3 show a schematic illustration of a supplying system 14 according to a first embodiment of the invention.

The supplying system 14 is configured to inject the electrolyte solution in the electrolyzer 20 through the electrolyte flow inlet 25. The supplying system 14 is thus fluidly connected to the electrolyzer 20 at the electrolyte flow inlet 25.

The supplying system 14 is adapted to push the electrolyte through into the electrolyte inlet 25 and through each fluidic channels 24 and out the electrolyte outlet 26.

In the first exemplary embodiment illustrated in Figures 2 and 3, the supplying system 14 is configured to work in a non-continuous mode, which will be detailed later.

The supplying system 14 comprises an electrolyte reservoir 30, configured to be fluidly connected to the electrolyzer 20, and a circulation unit 32 intended for circulating an electrolyte solution stored in the electrolyte reservoir 30.

Advantageously, as shown in Figure 2, the electrolyte reservoir 30 and the circulation unit 32 are arranged within a same enclosure 33

The electrolyte reservoir 30 is for example a tank, a pipe system or any other enclosure suitable for preparing and/or containing a large amount of electrolyte solution. The electrolyte reservoir 30 defines an inner volume V₃₀.

The electrolyte reservoir 30 defines at least an electrolyte supply inlet 34 and at least an electrolyte recovery outlet 36, through which it is fluidly connected to the electrolyte flow inlet 25 of the electrolyzer 20.

The electrolyte reservoir 30 is supplied in purified water or electrolyte through the electrolyte supply inlet 34, advantageously the electrolyte supply occurs by gravity. For example, the electrolyte reservoir 30 is supplied in purified water and the electrolyte is prepared by mixing with solid or liquid precursors. Advantageously, the electrolyte supply inlet 34 comprises a valve 340 that controls flow of the purified water/electrolyte through the electrolyte supply inlet 34.

The electrolyte can be an alkaline solution for example a potassium hydroxide solution with a concentration greater than 0.1 mol per liter (0,1M) of electrolyte, preferably greater than 1M, still preferably around 6M ; or an alkali-hydroxide solution (NaOH, LiOH, CsOH) with a concentration greater than 0.1 mol per liter of electrolyte, preferably greater than 1M or the mixture of a solution of alkali hydroxide with a concentration greater than 0.1 mol per litter. An additive can be used such as vanadium oxide (V2O5) for example with a concentration greater than 1 g per liter. Alternatively, the electrolyte can be an acidic solution or a mid-pH solution or pure water.

Advantageously, water for the electrolyte solution comes from the purified water stream 17 produced by the seawater desalinization unit 16.

The circulation unit 32 is configured to circulate the electrolyte solution stored in the electrolyte reservoir 30 to the electrolyte recovery outlet 36.

The circulation unit 32 comprises an osmosis unit 40 and a movable actuator 42 configured to create a displacement of the electrolyte solution in the electrolyte reservoir 30. The movable actuator 42 is arranged at least partially within or in contact with the osmosis unit 40.

The osmosis unit 40 comprises a first chamber 44 fluidly coupled to a source of a first solution, a second chamber 46 fluidly coupled to a source of a second solution and a semi-permeable membrane 48 separating the first and second chambers 44, 46.

In the embodiment of Figure 2, each chamber 44, 46 comprises at least a respective fluid inlet 50, 52. Advantageously, each fluid inlet 50, 52 comprises a valve 500, 520 that controls flow of the first solution or second solution through the fluid inlet 50, 52.

Advantageously, as shown in Figure 2, each chamber 44, 46 further comprises a respective purge outlet 54, 56. Advantageously, each purge outlet 54, 56 comprises a valve 540, 560 that controls flow of the first solution or second solution out of the first or second chamber 44, 46 through the purge outlet 54, 56.

In the embodiment of Figure 2, the first chamber 44 is connected through the associated fluid inlet 50 to a source (not shown) of the first solution, said first solution being a low-salted solution, while the second chamber 46 is connected through the associated fluid inlet 52 to a source (not shown) of the second solution, said second solution being a high-salted solution.

By "high-salted" and "low-salted" solutions, we mean aqueous solutions containing inorganic salts, the salt concentration in the high-salted solution being higher than the salt concentration is the low-salted concentration. The salt gradient between the chambers 44, 46 leads to water molecules transport through the membrane 48.

Advantageously, the low-salted solution is a fresh water with very low concentration of salts, typically the total concentration of ions being lower than 500mg/L to increase the salt gradient between the chambers. Alternatively, it can be seawater. The concentration of the low-salted solution is advantageously determined at entrance in the first chamber 44.

Advantageously, the high-salted solution is a very concentrated brine with a salt concentration equal or higher than seawater's concentration, typically equal or higher than 35g/L. Preferably, the salt concentration of high-salted solution is equal or up to 10 times higher than the seawater's concentration. The concentration of the high-salted solution is advantageously determined at entrance in the second chamber 46.

Advantageously, the mass concentration of the high-salted solution is at least 1.5 times higher than the concentration of the low-salted solution.

The resulting pressure from water molecule displacement through the membrane (equal to osmotic pressure) between the low-salted solution and the high-salted solution is preferably between 1 bar and 150 bars.

Above values of osmotic pressure and mass concentration are determined at 25°C and atmospheric pressure.

The low-salted solution is preferably fresh water form a lake or a river, or saline water, notably water from a sea, an ocean or a lake. As illustrated in Figure 1, the low-salted solution may come from the source 19 of water.

The high-salted solution (also called draw solution) is for example brackish water or brines, notably coming from the seawater desalinization unit 16, as it will be detailed below.

The high-salted solution has advantageously a NaCl ionic concentration comprised between 0,4 mol/L (for example for seawater) and 13,2 mol/L (for a saturated solution).

The NaCl ionic concentration of the low-salted solution is advantageously between 0.1 mmol/L and 0.5 mol/L.

The semi-permeable membrane 48 forms a separating wall between the first chamber 44 and the second chamber 46. A first side 60, also called feed side, of the membrane 48 is in contact with the first chamber 44 containing the low-salted solution. A second side 62 of the membrane 48 is in contact with the second chamber 46 containing the high-salted solution.

Advantageously, the semi-permeable membrane 48 is a water selectively permeable membrane, typically a molecular sieve made of a composite polymer-based material. For example, the membrane 48 is a thin-film composite membrane from two or more layered materials. The membrane 48 is typically made out of a thin polyamide layer, typically having a thickness lower than 200 nm, deposited on top of a polyethersulfone or polysulfone porous layer, typically of about 50 microns thick, on top of a non-woven fabric support sheet.

Water permeates through the membrane 48 from the first side 60 to the second side 62 due to a difference in salt concentration between the high-salted solution and the low-salted solution leading to an osmotic pressure.

The salt concentration of the initial high-salted solution then decreases, making it possible to reduce the salt concentration at the outlet of the second chamber 46.

The osmosis unit 40 is configured to move the actuator 42 by the osmosis phenomenon between the first and the second chambers 44, 46.

The actuator 42 is configured to use the mechanical energy generated by water displacement between the first and the second chambers 44, 46 to create circulation of the electrolyte solution by a compression effect in the electrolyte reservoir 30.

Advantageously, the actuator 42 is partly received in the osmosis unit 40, notably in the second chamber 44, and partly received in the electrolyte reservoir 30.

In the first exemplary embodiment illustrated in Figure 2, the actuator 42 is a piston 70.

The piston 70 is engaged in the enclosure 33, between the electrolyte reservoir 30 and the osmosis unit 40. A first side 72 of the piston 70 is in contact with the second chamber 46 of the osmosis unit 40 and a second side 74, opposite to the first side 72, of the piston 70 is in contact with the electrolyte reservoir 30. The piston 70 defines the separation between the second chamber 44 and the electrolyte reservoir 30.

The piston 70 is configured to move along a longitudinal axis X in response to water displacement within the second chamber 46.

The piston 70 is configured to move along the longitudinal axis X between an initial position, shown in Figure 2, in which the internal volume V₃₀ of the electrolyte reservoir 30 is maximal and a volume V₄₆ of the second chamber 44 is minimal, and a final position, shown in Figure 3, in which the internal volume V₃₀ of the electrolyte reservoir 30 is minimal and the volume V₄₆ of the second chamber 44 is maximal. Displacement is symbolized in Figure by arrow 75A.

Advantageously, the piston 70 is deprived of any electrical component.

When the installation 10 comprises a seawater desalinization unit 16, said seawater desalinization unit 16 is advantageously configured to feed the supplying system 14.

As known per se, the seawater desalinization unit 16 is configured to produce purified water from seawater and reject brines.

Advantageously, the purified water produced by the seawater desalinization unit 16 is used for the electrolyte solution. The purified water stream 17 is conveyed to the electrolytic reservoir 30, through the electrolyte supply inlet 34.

The seawater desalinization unit 16 further comprises a brine rejection system 76 configured to generate the brine stream 18, in order to get rid of the brine produced.

Advantageously, the brine rejection system 76 is configured to convey at least part of the brine stream 18 to the supplying system 14, more particularly to the osmosis unit 40. In particular, at least part of the brine stream 18 may be used as high-salted solution for second chamber 44. Potential rest of the brine stream 18 may be reinjected in the source 19 of water. Quantities of brines rejected in the source 19 of water are thus limited, reducing risks of an overconcentration of salt at the injection point of the brines leading to an important salinity gradient locally in the source 19 of water.

An operating method of the supplying system 14 according to the first embodiment of the invention will now be described. This method is for example carried out in the installation 10 according to the invention.

Initially, the piston 70 is in its initial position, as represented in Figure 2.

The electrolyte reservoir 30 is supplied in electrolyte or in purified water, through the supply inlet 34. Advantageously, the purified water stream 17 is conveyed from the desalinization unit 16 to the electrolytic reservoir 30, through the supply inlet 34, by opening valve 340.

Once the electrolyte reservoir 30 is filled, electrolyte or purified water supplying is stopped, for example by closing valve 340.

Then, the first and second solutions are injected respectively in the first and second chambers 44, 46 of the osmosis unit 40.

The low-salted solution is injected in the first chamber 44 and the high-salted solution is injected in the second chamber 46 through respective fluid inlet 50, 52, for example by opening, then closing, respective valves 500, 520. Advantageously, the step of injecting the high-salted solution comprises a preliminary step of recovering brine from the brine rejection system 76 of the desalination unit 16.

Due to the salt gradient between the low-salted solution and the high salted solution, water flows through the membrane 48 from the first chamber 44 to the second chamber 46, as long as the salt concentration is different on both sides of the membrane 48.

A water flux is thus generated between the first chamber 44 and the second chamber 46, activating the movable actuator 42.

As visible in Figure 2, the accumulation of fluid in the second chamber 46 pushes on the first side 72 of the piston 70. The piston 70 is axially moved along the longitudinal axis X, as shown in Figure 2. Displacement of the piston 70 is symbolized in Figure by arrow 75A.

Movement of the piston 70 leads to diminution of the internal volume V₃₀ of the electrolyte reservoir 30. The second side 74 of the piston 70 pushes on the electrolyte solution within the electrolyte reservoir 30, generating circulation of said solution through the electrolyte recovery outlet 36 and into the electrolyzer 20.

Displacement of water molecules through the membrane 48 of the osmosis unit 40 continue until an equilibrium of concentrations is reached. When said equilibrium is reached, the piston 70 stops moving. The piston 70 has reached its final position, represented in Figure 3. The internal volume V₃₀ of the electrolyte reservoir 30 is then minimal and the volume V₄₆ of the second chamber 44 is maximal.

There is then no more flow of electrolyte solution between the electrolyte reservoir 30 and the electrolyzer 20.

Advantageously, the salt gradient between the first and second solutions is chosen so that, at the end of the stroke of the piston 70, more than 95% of the electrolyte solution originally in the electrolyte reservoir 30 has been conveyed to the electrolyzer 20.

Advantageously, the method then comprises a step of purging the first and second chambers 44, 46.

As represented in Figure 3, valves 540 and 560 of the purge outlet 54, 56 are opened so that fluids are drained off from the first and second chambers 44, 46, in the meantime reservoir 30 is filled again with electrolyte by opening valve 340, leading to a displacement of the piston 70. In case of a vertical system configuration, a descent of the piston 70 can occur by gravity.

Displacement of the piston 70 during the purge step is symbolically represented by arrow 75B in Figure 3. At the end of its stroke, the piston 70 returns in its initial position.

The method can then be repeated.

The supplying system 14 works in a non-continuous mode, in the sense that fluids are not continuously injected in the electrolyte reservoir 30 or in the osmosis unit 40.

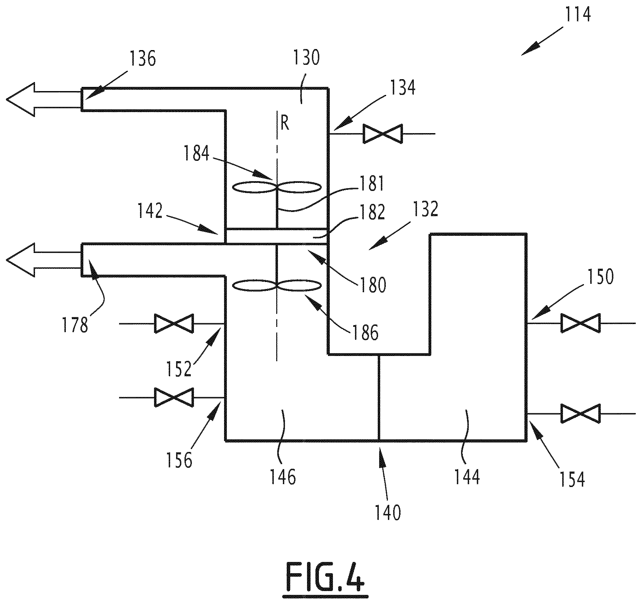

A second supplying system 114 according to the invention is schematically illustrated in Figure 4. In this Figure, components have been provided with reference numerals similar to those of corresponding similar components in Figures 2 and 3, but incremented by 100.

Advantageously, the supplying system 114 is configured to operate in a continuous mode, as it will be detailed later.

Similar to the supplying system 14 of Figures 2 and 3, the supplying system 114 according to the second embodiment comprises an electrolyte reservoir 130 defining at least an electrolyte supply inlet 134 and at least an electrolyte recovery outlet 136, through which it is fluidly connected to an electrolyzer (not shown).

The supplying system 114 also comprises a circulation device 132 comprising an osmosis unit 140 and a movable actuator 142.

The osmosis unit 140 is similar to the osmosis unit 40 according to the first embodiment illustrated in Figures 2 and 3.

Advantageously, the second chamber 146 of the osmosis unit 140 further comprises an additional fluid outlet 178, different from the purge outlet 156.

In a variant, the second chamber 146 is deprived of a purge outlet 156
In the second embodiment, the movable actuator 142 comprises a rotor system 180 arranged at a junction between the electrolyte reservoir 130 and the osmosis unit 140, in particular the second chamber 144.

Advantageously, the rotor system 180 is deprived of any electrical component.

The rotor system 180 comprises a shaft 181 extending through a faceplate 182 separating the electrolyte reservoir 130 from the second chamber 144, so that a first portion 184 of the rotor system 180 is received in the electrolyte reservoir 130 and a second portion 186 of the rotor system 180 is received in the second chamber 144.

Contrary to the piston 70 of the first embodiment, the faceplate 182 is unmovable relative to the enclosure 133, so that the volumes of the electrolyte reservoir 130 and of the second chamber 144 remain unchanged during operation of the supplying system 114.

In Figure 4, the rotor system 180 is illustrated as a double helix system. However, different configurations of the rotor system are possible.

The rotor system 180 is configured to rotate around a rotation axis R, rotation of the rotor system 180 being generated by water displacement between the first and second chambers 142, 144 of the osmosis unit 140.

An operating method of the supplying system 114 according to the second embodiment of the invention will now be described. This method is for example carried out in the installation 10 according to the invention.

The electrolyte reservoir 130 is supplied in electrolyte solution, through the electrolyte supply inlet 134, advantageously the electrolyte supply occurs by gravity. In the second embodiment illustrated in Figure 4, the electrolyte reservoir 130 can be fed with electrolyte without a stopping phase.

The first and second solutions are injected respectively in the first and second chambers 144, 146 of the osmosis unit 140, in a continuous manner.

The low-salted solution is injected in the first chamber 144 and the high-salted solution is injected in the second chamber 146 through respective fluid inlet 150, 152.

Due to the salt gradient between the low-salted solution and the high salted solution, water flows through the membrane 148 from the first chamber 144 to the second chamber 146. A water flux is thus generated between the first chamber 144 and the second chamber 146, causing rotation of the rotor system 180.

Water flows through the membrane 148 into the second chamber 146, before being evacuated through the additional fluid outlet 178. Water circulation in the second chamber 146 causes rotation of the second portion 186 of the rotor system 180 received in the second chamber 14 and hence rotation of the first portion 184 of the rotor system 180 as well. Rotation of the rotor system 180 creates an electrolyte flow in the electrolyte reservoir 130 and electrolyte is thus circulated between the electrolyte supply inlet 134 and the electrolyte recovery outlet 136.

As long as the first and second chambers 144, 146 are fed respectively with a low-salted solution and a high-salted solution, water molecules diffuse through the membrane 148 and this osmotic generated water flow activates the rotor system 180 that gives rise to an electrolyte flow formation in the electrolyte reservoir 130. The supplying system 114 works in a continuous mode.

Advantageously, the method may also comprise a step of purging the first and second chambers 144, 146, for example to carry out cleaning or maintenance operations. Thanks to the supplying system 14, 114 according to the invention, the electrolysis unit 12 can be supplied in electrolyte flow without needing an energy-consuming pumping system. The osmotic-generated flux in the osmotic unit 40, 140 allows the activation of the movable actuator 42, 142 and the circulation of the electrolyte solution with a sufficient velocity to feed the electrolyzer 20.

By limiting electrical energy consumption, the supplying system 14, 114 according to the invention allows to improve the energy efficiency of the water electrolysis process.

Furthermore, by using brines rejected from a desalinization unit 16, salt overconcentration phenomena at the outlet of the desalinization unit 16 can be avoided, or at least reduced.

## Claims

1. Supplying system (14; 114) for feeding an electrolysis unit (12) with an electrolyte feed stream (15), comprising
- an electrolyte reservoir (30; 130) configured to contain an electrolyte solution, the electrolyte reservoir (30; 130) comprising an electrolyte supply inlet (34; 134) and an electrolyte recovery outlet (36; 136), the electrolyte reservoir (30; 130) being configured to be fluidly connected to the electrolysis unit (12) through the electrolyte fluid recovery outlet (36; 136),
- a circulation unit (32; 132) for circulating an electrolyte solution stored in the electrolyte reservoir (30; 130) to the electrolyte recovery outlet (36; 136),
wherein the circulation unit (32; 132) comprises:
- a movable actuator (42; 142) configured to create a displacement of the electrolyte solution in the electrolyte reservoir (30; 130), and
- an osmosis unit (40; 140) comprising a first chamber (44, 144) fluidly coupled to a first source of a low-salted solution, a second chamber (46; 146) fluidly coupled to a second source of a high-salted solution and a semi-permeable membrane (48; 148) separating the first and second chambers (44, 46; 144, 146),
the osmosis unit (40; 140) being configured to move the actuator (42; 142) by an osmosis phenomenon between the first and the second chambers (44, 46; 144, 146).

2. Supplying system (14; 144) according to claim 1, wherein the high-salted solution has a salt mass concentration at least 1.5 times higher than a salt mass concentration of the low-salted solution, the mass concentration being measured 25°C under atmospheric pressure.

3. Supplying system (14; 144) according to claim 1 or 2, wherein the osmosis unit (40; 140) is fluidly coupled to a brine rejection system (76) of a desalinization unit (16).

4. Supplying system (14; 144) according to any one of the preceding claims, wherein each chamber (44, 46; 144, 146) further comprises a respective purge outlet (54, 56; 154, 156).

5. Supplying system (14; 144) according to any one of the preceding claims, wherein the actuator (42; 142) is at least partially received in the osmosis unit (40; 140), notably in the second chamber (46; 146), so that osmosis between the first chamber (44; 144) and the second chamber (46; 146) move the actuator (42; 142).

6. Supplying system (14; 144) according to any one of the preceding claims, wherein the actuator (42; 142) is at least partially received in the electrolyte reservoir (30; 130).

7. Supplying system (14) according to any one of the preceding claims, wherein the moveable actuator (42) is a piston (70), osmosis between the first and second chambers (44, 46) displacing of the piston (70) along a longitudinal axis (X).

8. Supplying system (114) according to any one of claims 1 to 6, wherein the moveable actuator (142) is a rotor system (180) configured to rotate around a rotation axis (R), rotation of the rotor system (180) being generated by osmosis between the first and second chambers (142, 144).

9. Supplying system (14; 144) according to any one of the preceding claims, wherein the semi-permeable membrane (48; 148) is made of a composite polymer-based material.

10. Installation (10), notably for the generation of dihydrogen and dioxygen by water electrolysis, for electrochemical CO₂ reduction, for electrochemical N₂ reduction of for chlor-alkali electrolysis, the installation (10) comprising:
- an electrolysis unit (12) adapted for receiving an electrolyte feed stream (15), the electrolysis unit (12) comprising an electrolyzer (20), and
- a supplying system (14; 144) according to any one of the preceding claims.

11. Installation (10) according to claim 10, wherein the electrolyzer (20) is a fluidic electrolyzer.

12. Installation (10) according to claim 10 or 11, further comprising a desalinization unit (16) configured to feed the osmosis unit (40; 140).

13. Method for feeding an electrolysis unit (12) with an electrolyte feed stream (15), comprising the step of:
- providing a supplying system (14; 144) according to any one of claims 1 to 9;
- injecting the electrolyte solution in the electrolyte reservoir (30; 130);
- injecting the low-salted solution in the first chamber (44; 144) of the osmosis unit (40; 140) and the high-salted solution in the second chamber (46; 146) of the osmosis unit (40; 140), so that there is a salt gradient between the first and the second chambers (44, 46; 144, 146), said salt gradient generating a water flux between the first chamber (44; 144) and the second chamber (46; 146), said water flux setting the actuator (42; 142) in motion.

14. Method according to claim 13, wherein the step of injecting the high-salted solution comprises a step of recovering brine from a brine rejection system (76) of a desalinization unit (16).

15. Method according to claim 13 or 14, further comprising a step of purging the first and second chambers (44, 46; 144, 146).

## Patentansprüche

1. Zufuhrsystem (14; 114) zum Speisen einer Elektrolyseeinheit (12) mit einem Elektrolytspeisestrom (15), umfassend
- einen Elektrolytbehälter (30; 130), der konfiguriert ist, um eine Elektrolytlösung zu enthalten, wobei der Elektrolytbehälter (30; 130) umfassend einen Elektrolytzufuhreinlass (34; 134) und einen Elektrolytrückgewinnungsauslass (36; 136), wobei der Elektrolytbehälter (30; 130) konfiguriert ist, um über den Elektrolytrückgewinnungsauslass (36; 136) fluidisch mit der Elektrolyseeinheit (12) verbunden zu sein,
- eine Umwälzeinheit (32; 132) zum Umwälzen der in dem Elektrolytbehälter (30; 130) gespeicherten Elektrolytlösung zu dem Elektrolytrückgewinnungsauslass (36; 136),
wobei die Umwälzeinheit (32; 132) Folgendes umfasst:
- einen bewegbaren Aktuator (42; 142), der konfiguriert ist, um eine Verlagerung der Elektrolytlösung in dem Elektrolytbehälter (30; 130) zu bewirken, und
- eine Osmoseeinheit (40; 140), umfassend eine erste Kammer (44; 144), die fluidisch mit einer ersten Quelle einer niedrigsalzigen Lösung verbunden ist, eine zweite Kammer (46; 146), die mit einer zweiten Quelle einer hochsalzigen Lösung verbunden ist, und eine semipermeable Membran (48; 148), die die erste und die zweite Kammer (44, 46; 144, 146) trennt,
wobei die Osmoseeinheit (40; 140) konfiguriert ist, um den Aktuator (42; 142) durch ein Osmosephänomen zwischen der ersten und der zweiten Kammer (44, 46; 144, 146) zu bewegen.

2. Zufuhrsystem (14; 144) nach Anspruch 1, wobei die hochsalzige Lösung eine Salzmassenkonzentration aufweist, die mindestens 1,5-mal so hoch ist wie eine Salzmassenkonzentration der niedrigsalzigen Lösung, wobei die Salzmassenkonzentration bei 25 °C unter atmosphärischem Druck gemessen wird.

3. Zufuhrsystem (14; 144) nach Anspruch 1 oder 2, wobei die Osmoseeinheit (40; 140) fluidisch mit einem Sole-Abscheidesystem (76) einer Entsalzungseinheit (16) gekoppelt ist.

4. Zufuhrsystem (14; 144) nach einem der vorherigen Ansprüche, wobei jede Kammer (44, 46; 144, 146) ferner einen jeweiligen Spülauslass (54, 56; 154, 156) umfasst.

5. Zufuhrsystem (14; 144) nach einem der vorherigen Ansprüche, wobei der Aktuator (42; 142) zumindest teilweise in der Osmoseeinheit (40; 140), insbesondere in der zweiten Kammer (46; 146), aufgenommen ist, sodass die Osmose zwischen der ersten Kammer (44; 144) und der zweiten Kammer (46; 146) den Aktuator (42; 142) bewegt.

6. Zufuhrsystem (14; 144) nach einem der vorherigen Ansprüche, wobei der Aktuator (42; 142) zumindest teilweise in dem Elektrolytbehälter (30; 130) aufgenommen ist.

7. Zufuhrsystem (14) nach einem der vorherigen Ansprüche, wobei der bewegbare Aktuator (42) ein Kolben (70) ist, eine Osmose zwischen der ersten und zweiten Kammer (44, 46) den Kolben (70) entlang einer Längsachse (X) verlagert.

8. Zufuhrsystem (114) nach einem der Ansprüche 1 bis 6, wobei der bewegbare Aktuator (142) ein Rotorsystem (180) ist, das konfiguriert ist, um um eine Rotationsachse (R) zu drehen, wobei eine Drehung des Rotorsystems (180) durch Osmose zwischen der ersten und der zweiten Kammer (142, 144) erzeugt wird.

9. Zufuhrsystem (14; 144) nach einem der vorherigen Ansprüche, wobei die semipermeable Membran (48; 148) aus einem Verbundmaterial auf Polymerbasis gefertigt ist.

10. Anlage (10), insbesondere zum Erzeugen von Wasserstoff und Sauerstoff durch Wasserelektrolyse, für elektrochemische CO₂-Reduktion, für elektrochemische N₂-Reduktion oder für Chlor-Alkali-Elektrolyse, die Anlage (10) umfassend:
- eine Elektrolyseeinheit (12), die zum Aufnehmen eines Elektrolytspeisetroms (15) angepasst ist, die Elektrolyseeinheit (12) umfassend einen Elektrolyseur (20), und
- ein Zufuhrsystem (14; 144) nach einem der vorherigen Ansprüche.

11. Anlage (10) nach Anspruch 10, wobei der Elektrolyseur (20) ein fluidischer Elektrolyseur ist.

12. Anlage (10) nach Anspruch 10 oder 11, ferner umfassend eine Entsalzungseinheit (16), die konfiguriert ist, um die Osmoseeinheit (40; 140) zu speisen.

13. Verfahren zum Speisen einer Elektrolyseeinheit (12) mit einem Elektrolytspeisestrom (15), umfassend den folgenden Schritt:
- Bereitstellen eines Zufuhrsystems (14; 144) nach einem der Ansprüche 1 bis 9;
- Einspritzen der Elektrolytlösung in den Elektrolytbehälter (30; 130);
- Einspritzen der niedrigsalzigen Lösung in die erste Kammer (44; 144) der Osmoseeinheit (40; 140) und der hochsalzigen Lösung in die zweite Kammer (46; 146) der Osmoseeinheit (40; 140), sodass es einen Salzgradienten zwischen der ersten und der zweiten Kammer (44, 46; 144, 146) gibt, wobei der Salzgradient einen Wasserfluss zwischen der ersten Kammer (44; 144) und der zweiten Kammer (46; 146) erzeugt, wobei der Wasserfluss den Aktuator (42; 142) in Bewegung versetzt.

14. Verfahren nach Anspruch 13, wobei der Einspritzschritt der hochsalzigen Lösung einen Rückgewinnungsschritt von Sole aus einem Sole-Abscheidesystem (76) der Entsalzungseinheit (16) umfasst.

15. Verfahren nach Anspruch 13 oder 14, ferner umfassend einen Schritt eines Spülens der ersten und der zweiten Kammer (44, 46; 144, 146).

## Revendications

1. Système d'alimentation (14 ; 114) destiné à fournir à une unité d'électrolyse (12) un flux d'alimentation en électrolyte (15), comprenant
- un réservoir d'électrolyte (30 ; 130) configuré pour contenir une solution d'électrolyte, le réservoir d'électrolyte (30 ; 130) comprenant une entrée d'alimentation en électrolyte (34 ; 134) et une sortie de récupération d'électrolyte (36 ; 136), le réservoir d'électrolyte (30 ; 130) étant configuré pour être relié fluidiquement à l'unité d'électrolyse (12) par la sortie de récupération de fluide d'électrolyte (36 ; 136),
- une unité de circulation (32 ; 132) destinée à faire circuler une solution d'électrolyte stockée dans le réservoir d'électrolyte (30 ; 130) vers la sortie de récupération d'électrolyte (36 ; 136),
dans lequel l'unité de circulation (32 ; 132) comprend :
- un actionneur mobile (42 ; 142) configuré pour créer un déplacement de la solution d'électrolyte dans le réservoir d'électrolyte (30 ; 130), et
- une unité d'osmose (40 ; 140) comprenant une première chambre (44, 144) couplée fluidiquement à une première source d'une solution faiblement salée, une seconde chambre (46 ; 146) couplée fluidiquement à une seconde source d'une solution fortement salée et une membrane semi-perméable (48 ; 148) séparant les première et seconde chambres (44, 46 ; 144, 146),
l'unité d'osmose (40 ; 140) étant configurée pour déplacer l'actionneur (42 ; 142) par un phénomène d'osmose entre la première et la seconde chambre (44, 46 ; 144, 146).

2. Système d'alimentation (14 ; 144) selon la revendication 1, dans lequel la solution fortement salée a une concentration en masse en sel au moins 1,5 fois supérieure à une concentration en masse en sel de la solution faiblement salée, la concentration en masse étant mesurée à 25 °C sous pression atmosphérique.

3. Système d'alimentation (14 ; 144) selon la revendication 1 ou 2, dans lequel l'unité d'osmose (40 ; 140) est couplée fluidiquement à un système de rejet de saumure (76) d'une unité de désalinisation (16).

4. Système d'alimentation (14 ; 144) selon l'une quelconque des revendications précédentes, dans lequel chaque chambre (44, 46 ; 144, 146) comprend en outre une sortie de purge (54, 56 ; 154, 156) respective.

5. Système d'alimentation (14 ; 144) selon l'une quelconque des revendications précédentes, dans lequel l'actionneur (42 ; 142) est au moins partiellement reçu dans l'unité d'osmose (40 ; 140), notamment dans la seconde chambre (46 ; 146), de sorte que l'osmose entre la première chambre (44 ; 144) et la seconde chambre (46 ; 146) déplace l'actionneur (42 ; 142).

6. Système d'alimentation (14 ; 144) selon l'une quelconque des revendications précédentes, dans lequel l'actionneur (42 ; 142) est au moins partiellement reçu dans le réservoir d'électrolyte (30 ; 130).

7. Système d'alimentation (14) selon l'une quelconque des revendications précédentes, dans lequel l'actionneur mobile (42) est un piston (70), l'osmose entre les première et seconde chambres (44, 46) déplaçant le piston (70) le long d'un axe longitudinal (X).

8. Système d'alimentation (114) selon l'une quelconque des revendications 1 à 6, dans lequel l'actionneur mobile (142) est un système de rotor (180) configuré pour tourner autour d'un axe de rotation (R), la rotation du système de rotor (180) étant générée par l'osmose entre les première et seconde chambres (142, 144).

9. Système d'alimentation (14 ; 144) selon l'une quelconque des revendications précédentes, dans lequel la membrane semi-perméable (48 ; 148) est constituée d'un matériau composite à base de polymère.

10. Installation (10), notamment pour la production de dihydrogène et de dioxygène par électrolyse de l'eau, pour la réduction électrochimique du CO₂, pour la réduction électrochimique du N₂ ou pour l'électrolyse du chlorure alcalin, l'installation (10) comprenant :
- une unité d'électrolyse (12) adaptée pour recevoir un flux d'alimentation en électrolyte (15), l'unité d'électrolyse (12) comprenant un électrolyseur (20), et
- un système d'alimentation (14 ; 144) selon l'une quelconque des revendications précédentes.

11. Installation (10) selon la revendication 10, dans laquelle l'électrolyseur (20) est un électrolyseur fluidique.

12. Installation (10) selon la revendication 10 ou 11, comprenant en outre une unité de désalinisation (16) configurée pour alimenter l'unité d'osmose (40 ; 140).

13. Procédé destiné à fournir à une unité d'électrolyse (12) un flux d'alimentation en électrolyte (15), comprenant l'étape de :
- fourniture d'un système d'alimentation (14 ; 144) selon l'une quelconque des revendications 1 à 9 ;
- l'injection de la solution d'électrolyte dans le réservoir d'électrolyte (30 ; 130) ;
- l'injection de la solution faiblement salée dans la première chambre (44 ; 144) de l'unité d'osmose (40 ; 140) et de la solution fortement salée dans la seconde chambre (46 ; 146) de l'unité d'osmose (40 ; 140), de sorte qu'il existe un gradient de salinité entre la première et la seconde chambre (44, 46 ; 144, 146), ledit gradient de salinité générant un flux d'eau entre la première chambre (44 ; 144) et la seconde chambre (46 ; 146), ledit flux d'eau mettant en mouvement l'actionneur (42 ; 142).

14. Procédé selon la revendication 13, dans lequel l'étape d'injection de la solution fortement salée comprend une étape de récupération de saumure à partir d'un système de rejet de saumure (76) d'une unité de désalinisation (16).

15. Procédé selon la revendication 13 ou 14, comprenant en outre une étape de purge des première et seconde chambres (44, 46 ; 144, 146).
